# EUROPÄISCHE PATENTSCHRIFT

(11) **EP 3 133 309 B1**
(45) Veröffentlichungstag und Bekanntmachung des Hinweises auf die Patenterteilung: **05.09.2018**
(21) Anmeldenummer: 16001563.2
(22) Anmeldetag: 15.07.2016
(51) Int. Cl.: F16D 23/02, F16D 69/02

(54) **VERFAHREN ZUR HERSTELLUNG EINES SYNCHRONRINGS**
METHOD FOR MANUFACTURING A SYNCHRONISING RING
PROCEDE DE FABRICATION D'UN ANNEAU SYNCHRONE

(30) Priorität: 30.07.2015 DE 102015009706
(43) Veröffentlichungstag der Anmeldung: 22.02.2017
(73) Patentinhaber: Diehl Metall Stiftung & Co. KG, 90552 Röthenbach (DE)
(72) Erfinder: Rahm, Sabine, 91207 Lauf (DE); Erdmann, Knut, 90478 Nürnberg (DE); Dörnhöfer, Martin, 92237 Sulzbach-Rosenberg (DE)
(74) Vertreter: Diehl Patentabteilung

(56) Entgegenhaltungen:
- EP-A1- 0 887 572
- EP-A1- 1 382 879
- EP-A2- 0 926 111
- DE-A1- 19 812 912
- DE-A1-102006 042 442
- DE-B3- 10 334 895
- US-A1- 2006 237 279

## Beschreibung

Die Erfindung betrifft ein Verfahren zur Herstellung eines Synchronrings nach dem Oberbegriff des Patentanspruchs 1.

Ein solches Verfahren ist aus der DE 103 34 895 B3 bekannt. Bei dem bekannten Verfahren wird der aus dem Verbundwerkstoff hergestellte Reibring bei 1100 °C unter Inertgas-Atomsphäre pyrolysiert, so dass sich der wesentliche Teil des Harzes in amorphen Kohlenstoff umsetzt. Anschließend wird der so behandelte Reibring erneut mit Harz getränkt und die Pyrolyse wird wiederholt. Sodann werden die Kohlefasern und der bei der Pyrolyse erzeugte Kohlenstoff durch eine Tränkung mit Harz fixiert. Der Reibring wird in einem weiteren Herstellungsschritt verdichtet. Schließlich wird der so hergestellte Reibring auf die Verbindungsfläche des Ringkörpers aufgeklebt.

Das bekannte Verfahren erfordert relativ viele Herstellungsschritte und ist aufwändig.

Aufgabe der Erfindung ist es, die Nachteile nach dem Stand der Technik zu beseitigen. Es soll insbesondere ein möglichst einfach und kostengünstig durchführbares Verfahren zur Herstellung eines Synchronrings mit verbesserten Reibeigenschaften angegeben werden.

Diese Aufgabe wird durch die Merkmale des Patentanspruchs 1 gelöst. Zweckmäßige Ausgestaltungen der Erfindung ergeben sich aus den Merkmalen der Unteransprüche.

Nach Maßgabe der Erfindung wird ausschließlich eine der Verbindungsfläche abgewandte äußere Schicht des Reibrings pyrolysiert. - Die so erzeugte äußere Schicht weist hervorragende Reibeigenschaften, insbesondere Nassreibeigenschaften, auf. Ein nach dem erfindungsgemäßen Verfahren hergestellter Synchronring zeichnet sich durch einen geringen Verschleiß aus. Indem ausschließlich eine äußere Schicht des Reibrings pyrolysiert wird, bleibt die ursprüngliche Verbundstruktur des Verbundmaterials im Bereich einer sich von der Verbindungsfläche zur äußeren Schicht erstreckenden inneren Schicht des Reibrings erhalten. Die innere Schicht gewährleistet eine besonders feste Anbindung des Reibrings an den Ringkörper sowie eine feste Verbindung mit der äußeren Schicht. Das vorgeschlagene Verfahren erfordert wenige Herstellungsschritte. Es kann einfach und kostengünstig durchgeführt werden.

Bei der "konischen Verbindungsfläche" des Ringkörpers kann es sich um eine Außenumfangs- oder eine Innenumfangsfläche des Ringkörpers handeln. Eine Neigung der konischen Verbindungsfläche beträgt typischerweise 8°. Der Schritt des Aufklebens des Reibrings auf die Verbindungsfläche kann vor oder nach dem Schritt des Pyrolysierens durchgeführt werden. Die Pyrolyse findet vorteilhafterweise nach dem Schritt des Aufklebens des Reibrings auf die Verbindungsfläche statt.

Nach einer vorteilhaften Ausgestaltung wird als Harz Phenol- oder Epoxidharz verwendet. Die Kohlenfasern bilden zweckmäßigerweise ein Kohlefasergewebe. Ein Reibring aus einem mit Phenolharz gebundenen Kohlefasergewebe zeichnet sich durch eine besonders hohe Verschleißfestigkeit aus.

Nach einer weiteren Ausgestaltung der Erfindung beträgt eine erste Dicke D1 des Reibrings 0,2 bis 1,5 mm, vorzugsweise 0,3 mm bis 0,6 mm. Die durch die Pyrolyse gebildete äußere Schicht weißt vorteilhafterweise eine zweite Dicke D2 von 20 µm bis 500 µm, vorzugsweise 40 µm bis 350 µm, besonders bevorzugt 100 µm bis 200 µm, auf. Zweckmäßigerweise weist eine von der Verbindungsfläche bis zur äußeren Schicht sich erstreckende innere Schicht des Reibrings eine dritte Dicke D3 im Bereich von 100 µm bis 500 µm, vorzugsweise 250 µm bis 350 µm, auf. Für ein Verhältnis der dritten Dicke D3 zur zweiten Dicke D2 gilt vorteilhafterweise:
D3/D2 = c, wobei c eine Zahl von 0,5 bis 3,0, vorzugsweise 1,7 bis 2,2, ist.

D. h. die innere Schicht ist vorteilhafterweise etwa doppelt so dick wie die äußere Schicht. Ein solchermaßen hergestellter Synchronring zeichnet sich durch hervorragende Nassreibeigenschaften aus.

Nach einer weiteren Ausgestaltung der Erfindung wird die äußere Schicht bei einer Temperatur von zumindest 600 °C, vorzugsweise 700 °C bis 1500 °C, pyrolysiert. Damit ergibt sich im Bereich der äußeren Schicht ein Verbundwerkstoff, dessen Matrix aus Kohlenstoff besteht und mit Kohlefasern verstärkt ist. Mit zunehmender Pyrolysetemperatur steigt der Anteil des Harzes in der äußeren Schicht, welcher vollständig in Kohlenstoff umgewandelt wird. Es kann vorteilhaft sein, das Harz in der äußeren Schicht lediglich teilweise in Kohlenstoff umzuwandeln. Ein Anteil des vollständig in Kohlenstoff umgewandelten Harzes in der äußeren Schicht beträgt vorteilhafterweise 40 bis 90%.

Die Pyrolyse wird zweckmäßigerweise unter einer Schutzgasatmosphäre, vorzugsweise unter N₂- oder Ar-Atmosphäre durchgeführt. Die Durchführung der Pyrolyse unter Schutzgasatmosphäre wirkt einer unkontrollierten Verbrennung im Bereich der äußeren Schicht entgegen.

Nach einer weiteren vorteilhaften Ausgestaltung wird die Pyrolyse mittels eines Lasers, eines IR-Strahlers oder durch Kontakt mit einem heißen Metallkörper durchgeführt. Ferner kann die Pyrolyse durch Beaufschlagen mittels heißem Schutzgas oder reduzierender Flamme durchgeführt werden. - Die Durchführung der Pyrolyse mittels eines Lasers ist besonders vorteilhaft, da damit besonders gut reproduzierbare Ergebnisse erzielt werden können.

Der Ringkörper ist zweckmäßigerweise aus einem der folgenden Materialien hergestellt: Messing, Stahl, Sinterstahl, Messing-Stahl-Verbund.

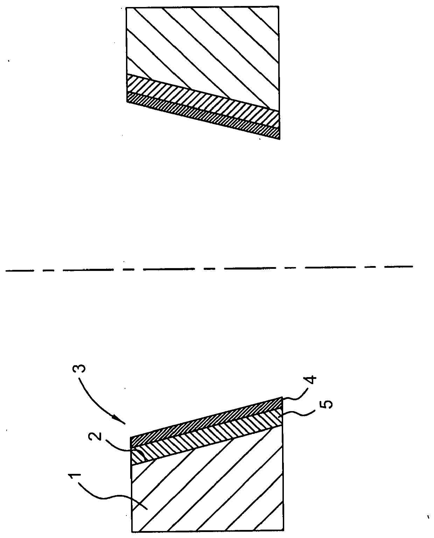

Nachfolgend wird die Erfindung anhand eines Beispiels sowie der einzigen Figur näher erläutert.

### Beispiel:

Zur Herstellung des Synchronrings wird ein aus Messing hergestellter Ringkörper hergenommen, welcher an seinem Innenumfang eine konische Verbindungsfläche aufweist. Auf die Verbindungsfläche wird sodann ein Reibring mittels eines Phenolharzes aufgeklebt, welcher aus einem Verbundwerkstoff aus einem mit Phenolharz oder einem anderen temperaturbeständigen Klebstoff infiltrierten Kohlefasergewebe gebildet ist. Der Reibring weist eine erste Dicke D1 von beispielsweise 0,4 bis 0,5 mm auf. Im Anschluss daran wird eine der Verbindungsfläche gegenüberliegende äußere Schicht des Reibrings mittels eines Lasers pyrolysiert. Dazu kann der Ringkörper rotiert und gleichzeitig mit dem Laser auf die äußere Schicht gestrahlt werden. Bei dem Laser kann es sich beispielsweise um einen CO₂-Laser, einen Faserlaser, einen Nd:YAG-Laser oder dgl. handeln. Der Laser kann eine Laserenergieleistung im Bereich von 2 kW aufweisen.

Eine Leistung des Lasers sowie eine Behandlungsdauer werden so gewählt, dass eine äußere Schicht mit einer zweiten Dicke D2 im Bereich von 0,1 bis 0,2 mm hergestellt wird.

Die einzige Figur zeigt einen Radialschnitt durch einen Synchronring. Ein beispielsweise aus Messing hergestellter Ringkörper 1 weist an seinem Innenumfang eine konische Verbindungsfläche 2 auf. Auf die konische Verbindungsfläche 2 ist ein allgemein mit dem Bezugszeichen 3 bezeichneter Reibring aufgeklebt. Eine äußere Schicht 4 des Reibrings 3 ist pyrolysiert. Sie besteht im Wesentlichen aus einem Kohlefasergewebe und darin eingelagertem Kohlenstoff, der z. B. aus Grafit oder Ruß gebildet ist. Mit dem Bezugszeichen 5 ist eine innere Schicht des Reibrings 3 bezeichnet. Die innere Schicht ist gebildet aus einem Kohlenstoffgewebe, welches mit Phenolharz infiltriert ist. Der Reibring 3 ist zweckmäßigerweise mittels Phenolharz auf die Verbindungsfläche 2 aufgeklebt.

### Bezugszeichenliste

- 1: Ringkörper
- 2: Verbindungsfläche
- 3: Reibring
- 4: äußere Schicht
- 5: innere Schicht

- D1: erste Dicke
- D2: zweite Dicke
- D3: dritte Dicke

## Patentansprüche

1. Verfahren zur Herstellung eines Synchronrings mit den Schritten in der folgenden Reihenfolge:
Bereitstellen eines Ringkörpers (1) aus Metall mit einer konischen Verbindungsfläche (2),
Bereitstellen eines zur Verbindungsfläche (2) korrespondierenden Reibrings (3) aus einem Verbundwerkstoff aus mit einem Harz gebundenen Kohlefasern,
Aufkleben des Reibrings (3) auf die Verbindungsfläche (2),
**gekennzeichnet durch** den folgenden Schritt:
Pyrolysieren ausschließlich einer der Verbindungsfläche (2) abgewandten äußeren Schicht (4) des Reibrings (3).

2. Verfahren nach Anspruch 1,
wobei das Harz Phenol- oder Epoxidharz ist.

3. Verfahren nach einem der vorhergehenden Ansprüche,
wobei die Kohlefasern ein Kohlefasergewebe bilden.

4. Verfahren nach einem der vorhergehenden Ansprüche,
wobei eine erste Dicke (D1) des Reibrings (3) 0,2 bis 1,5 mm, vorzugsweise 0,3 mm bis 0,6 mm beträgt.

5. Verfahren nach einem der vorhergehenden Ansprüche,
wobei die durch die Pyrolyse gebildete äußere Schicht (4) eine zweite Dicke (D2) von 20 µm bis 500 µm, vorzugsweise 40 µm bis 350 µm, besonders bevorzugt 100 µm bis 200 µm, aufweist.

6. Verfahren nach einem der vorhergehenden Ansprüche,
wobei eine von der Verbindungsfläche (2) bis zur äußeren Schicht (4) sich erstreckende innere Schicht (5) des Reibrings (3) eine dritte Dicke (D3) im Bereich von 100 µm bis 500 µm, vorzugsweise 250 µm bis 350 µm, aufweist.

7. Verfahren nach einem der vorhergehenden Ansprüche,
wobei für ein Verhältnis der dritten Dicke (D3) zur zweiten Dicke (D2) gilt:
D3/D2 = c, wobei c eine Zahl von 0,5 bis 3,0, vorzugsweise 1,7 bis 2,2, ist.

8. Verfahren nach einem der vorhergehenden Ansprüche,
wobei die äußere Schicht (4) bei einer Temperatur von zumindest 600 °C, vorzugsweise 700 °C bis 1500 C, pyrolysiert wird.

9. Verfahren nach einem der vorhergehenden Ansprüche,
wobei die Pyrolyse unter einer Schutzgasatmosphäre, vorzugsweise unter N₂- oder Ar-Atmosphäre, durchgeführt wird.

10. Verfahren nach einem der vorhergehenden Ansprüche,
wobei die Pyrolyse mittels eines Lasers, eines IR-Strahlers oder durch Kontakt mit einem heißen Metallkörper durchgeführt wird.

11. Verfahren nach einem der vorhergehenden Ansprüche,
wobei die Pyrolyse durch Beaufschlagen mittels heißem Schutzgas oder reduzierender Flamme durchgeführt wird.

12. Verfahren nach einem der vorhergehenden Ansprüche,
wobei der Ringkörper (1) aus einem der folgenden Materialien hergestellt ist: Messing, Stahl, Sinterstahl, Messing-Stahl-Verbund.

## Claims

1. Method for producing a synchronizer ring, comprising the steps in the following order:
providing a ring body (1) made of metal having a conical connecting surface (2),
providing a friction ring (3), corresponding to the connecting surface (2), made of a composite material of carbon fibres bound with a resin,
adhesively bonding the friction ring (3) to the connecting surface (2),
**characterized by** the following step:
pyrolysing exclusively an outer layer (4) of the friction ring (3) which is remote from the connecting surface (2).

2. Method according to Claim 1, wherein the resin is phenolic or epoxy resin.

3. Method according to either of the preceding claims, wherein the carbon fibres form a carbon fibre fabric.

4. Method according to one of the preceding claims, wherein a first thickness (D1) of the friction ring (3) is 0.2 to 1.5 mm, preferably 0.3 mm to 0.6 mm.

5. Method according to one of the preceding claims, wherein the outer layer (4) formed by the pyrolysis has a second thickness (D2) of 20 µm to 500 µm, preferably 40 µm to 350 µm, particularly preferably 100 µm to 200 µm.

6. Method according to one of the preceding claims, wherein an inner layer (5) of the friction ring (3) extending from the connecting surface (2) as far as the outer layer (4) has a third thickness (D3) in the range of 100 µm to 500 µm, preferably 250 µm to 350 µm.

7. Method according to one of the preceding claims, wherein the following holds true for a ratio of the third thickness (D3) to the second thickness (D2) :
D3/D2 = c, where c is a number from 0.5 to 3.0, preferably 1.7 to 2.2.

8. Method according to one of the preceding claims, wherein the outer layer (4) is pyrolysed at a temperature of at least 600°C, preferably 700°C to 1500°C.

9. Method according to one of the preceding claims, wherein the pyrolysis is carried out under a protective gas atmosphere, preferably under an N₂ or Ar atmosphere.

10. Method according to one of the preceding claims, wherein the pyrolysis is carried out by means of a laser, an IR radiator or by contact with a hot metal body.

11. Method according to one of the preceding claims, wherein the pyrolysis is carried out by the application of hot protective gas or a reducing flame.

12. Method according to one of the preceding claims, wherein the ring body (1) is produced from one of the following materials: brass, steel, sintered steel, brass-steel composite.

## Revendications

1. Procédé de fabrication d'un anneau de synchronisation, comprenant les étapes suivantes dans l'ordre indiqué :
fourniture d'un corps annulaire (1) en métal muni d'une surface de liaison (2) conique,
fourniture d'un anneau de friction (3) correspondant à la surface de liaison (2) en un matériau composite constitué de fibres de carbone liées avec une résine,
collage de l'anneau de friction (3) sur la surface de liaison (2),
**caractérisé par** l'étape suivante :
pyrolyse exclusivement d'une couche externe (4) de l'anneau de friction (3), opposée à la surface de liaison (2).

2. Procédé selon la revendication 1, la résine étant de la résine à base de phénol ou d'époxy.

3. Procédé selon l'une des revendications précédentes, les fibres de carbone formant une structure en fibres de carbone.

4. Procédé selon l'une des revendications précédentes, une première épaisseur (D1) de l'anneau de friction (3) étant égale à 0,2 à 1,5 mm, de préférence à 0,3 mm à 0,6 mm.

5. Procédé selon l'une des revendications précédentes, la couche externe (4) formée par la pyrolyse présentant une deuxième épaisseur (D2) de 20 µm à 500 µm, de préférence de 40 µm à 350 µm, notamment de préférence de 100 µm à 200 µm.

6. Procédé selon l'une des revendications précédentes, une couche interne (5) de l'anneau de friction (3), qui s'étend de la surface de liaison (2) à la couche externe (4), présentant une troisième épaisseur (D3) dans la plage de 100 µm à 500 µm, de préférence de 250 µm à 350 µm.

7. Procédé selon l'une des revendications précédentes, la règle suivante s'appliquant à un rapport entre la troisième épaisseur (D3) et la deuxième épaisseur (D2) :
D3/D2 = c, où c est un nombre de 0,5 à 3,0, de préférence de 1,7 à 2,2.

8. Procédé selon l'une des revendications précédentes, la couche externe (4) étant pyrolysée à une température minimale de 600 °C, de préférence de 700 °C à 1500 °C.

9. Procédé selon l'une des revendications précédentes, la pyrolyse étant réalisée sous atmosphère de gaz protecteur, de préférence sous atmosphère de N₂ ou d'Ar.

10. Procédé selon l'une des revendications précédentes, la pyrolyse étant réalisée au moyen d'un laser, d'un projecteur d'IR ou par contact avec un corps métallique chaud.

11. Procédé selon l'une des revendications précédentes, la pyrolyse étant réalisée par sollicitation au moyen d'un gaz protecteur chaud ou d'une flamme réduite.

12. Procédé selon l'une des revendications précédentes, le corps annulaire (1) étant fabriqué dans l'un des matériaux suivants : laiton, acier, acier fritté, composé laiton-acier.
